# EUROPEAN PATENT APPLICATION

(11) **EP 2 180 199 A1**
(43) Date of publication of application: **28.04.2010**
(21) Application number: 09252299.4
(22) Date of filing: 29.09.2009
(51) Int. Cl.: F16B 37/12, F16B 39/30, F16L 15/04, F16L 15/06, F16B 33/00

(54) **Thread, fastening system, pipe fitting and method for manufacturing thread**

(30) Priority: 23.10.2008 JP 2008273531
(71) Applicant: Yugen Kaisha Hama International, Okaya-shi Nagano 394-0034 (JP)
(72) Inventor: Hama, Tomio, Okaya-shi Nagano 394-0035 (JP); Hamaue, Yuji, Okaya-shi Nagano 394-0035 (JP)
(74) Representative: Gill, Stephen Charles

(57) **Abstract**

To provide a thread (1) in which looseness can be prevented over a long period of time, and a high sealing properties can be maintained, a manufacturing method of the thread (1), a fastening system using the thread (1), and a pipe fitting (7) using the thread (1). A thread (1) according to the present invention is provided, wherein, a screw thread member (2) of which screw threads (33) are formed on an outer periphery thereof and which is made up of a softer material than that of an insert core (3) is formed in a close contact with an outer periphery of the insert core (3), large-diameter parts (32, 34) that sandwich the screw thread member (2) therebetween in an axis line direction are formed, in a fore end part (3 a) and a rear end part (3b) of the insert core (3) or an intermediate part nearer to the fore end part (3a) from the rear end part (3b), and screw threads (33) that are continuous to screw threads of the screw thread member (2) are formed on an outer periphery of a large-diameter part (32) of the fore end part (3a).

## Description

### BACKGROUND OF THE INVENTION

### Field of the Invention

The present invention relates to a thread, a method for manufacturing the thread, a fastening system and a pipe fitting using the thread.

### Description of the Related Art

To prevent looseness over a long period of time with respect to thread parts has been a conventional problem.

Similar to threads as described in, for example, Patent Document 1, there is proposed a technique for preventing looseness in such a manner that a deeper groove is formed than a thread root part along an axis line of a leg part, and a anti-loose member made up of a metal wire and a resin material that encapsulates it internally is inserted fitly into the groove, the resin material is deformed to have an elasticity along female-threads, as well as the metal wire is pressed into the groove along female-threads against a bouncing force of the resin material.

As another example, similar to threads as described in Patent Document 2, there is proposed a technique for preventing looseness in such a manner that a mounting groove that constitutes an even lower and wider root than a thread groove of male-threads is provided in a range to screw fit with female-threads, on an outer circumferential surface of the leg part, and an elastic element that comes into contact with screw threads of counterpart to be screwed fit together and elastically deforms is attached to the mounting groove.

Besides, there is proposed a technique for preventing looseness by providing a configuration in which resins are adhered to an outer periphery of male-threads (Refer to Patent Document 3).

However, as described above, in threads which cause anti-looseness action by a combination of dissimilar members (engagement), thread counterpart results in receiving a drag in an axis line direction during fastening operation. As a result, a problem could arise that dissimilar members frequently introduce mutually positional displacement from each other in an axis line direction, and a fastening force is decreased.

For purpose of solving such a problem, similar to threads as described in, for example, Patent Document 4, a technique for achieving an anti-dislocation is proposed in the following manner. In a structure combining a first member constituting an axis core of a thread head part with a second member having a screw thread part made up of separate material integrally formed by being closely contacted and engaged and locked up spanning from a predetermined position excluding an fore end part with respect to a surface thereof to a position of abutting against thread head part, substantially disk-shaped latch part that regulates a positional displacement deformation from an axis core direction caused by a drag from a fastening purpose member during fastening operation in a thread core part of the first member to act as an anti-dislocation function is latchably provided to a fore end surface part of a second member, thereby achieving a retaining of a fastening force and anti-dislocation of a member provided on an outer periphery.

Incidentally, in regard to a thread for pipe applications for use in piping applications, taper pipe threads where screw threads are formed in tapered shape have been conventionally in wide use. Particularly, not being loosened over a long period of time, as long as they are used in applications where to cause a fluid to pass therethrough, and achieving high sealing properties have become problems.

For purpose of solving such problems, for example, similar to threads as described in Patent Document 5, a technique for maintaining a good resistance to internal pressure performance is proposed by comprising a pin part having male-threads, and a box part provided with a groove having female-threads, inserting a fluorine-based resin ring into the groove to constitute a threaded joint for pipe applications, and then subjecting the fluorine-based resin ring to uniformly compressive deformation in a circumferential direction.
Patent Document 1 Japanese Patent Application Laid-Open No. 2005-240964
Patent Document 2 Japanese Patent Application Laid-Open No. 9-177924
Patent Document 3 Japanese Patent Application Laid-Open No. 8-42545
Patent Document 4 Japanese Patent Application Laid-Open No. 2004-190800
Patent Document 5 Japanese Patent Application Laid-Open No. 10-212889

### SUMMARY

### Problems which can be solved by the invention

In a tapered thread, however, not only a drag is generated in the axis line direction during fastening operation, but also a compressive force results in acting in a radial direction. For this reason, in a case where, for example, a separate member is provided between thread parts to be screwed fit with each other for enhancing a close contact therebetween, the separate member in question is subjected to a deformation generated like so to speak flowing out in both directions of a screwing direction of an axis line direction, and in reverse direction thereto, and consequently a problem that fastened thread is loosened can possibly arise.

In addition, in a case where, for example, a thread part (e.g., male-thread part) is formed in a double structure made up of a core material and an outer peripheral material, an outer peripheral material deforms in reverse direction to a screwing direction, by a drag in the axis line direction receiving from thread part (e.g., female-thread part) of counterpart, leading to positional displacement between the core material and the outer peripheral material, and similar to the above, the outer peripheral material is subjected to a deformation like flowing out so to speak in both directions of a screwing direction of an axis line direction, and in reverse direction thereto, and consequently a problem that fastened thread is loosened can possibly arise. This can remarkably occur particularly when an outer peripheral material is made up of resins.

The present invention, which was made in view of the above-described situation, is directed to providing a thread which can prevent looseness over a long period of time, and maintain a high sealing capability, a method of manufacturing the thread, a fastening system using the thread, a pipe fitting using the thread.

### Means for addressing the problems

The present invention can solve the problems by a solving device as described below.

The thread (i.e. thread system) may conform to requirements that a screw thread member has screw threads formed on an periphery thereof, the screw thread member made up of softer material than that of an insert core is formed in a close contact with an outer periphery of an insert core, large-diameter parts that sandwich the screw thread member in an axis line direction are formed, in a fore end part and a rear end part of the insert core or an intermediate part, namely, nearer to the fore end part from the rear end part, screw threads that are continuous to screw threads of the screw thread member are formed on an outer periphery of a large-diameter part of the fore end part.

It becomes possible to regulate deformation that is developed like flowing out in both directions of screwing direction of the axis line direction and reverse direction thereto, when fastening threads. In addition, it becomes possible to prevent the occurrence of a positional displacement between the insert core and the screw thread member resulting from deformation in a screwing direction and in reverse direction thereto. Thereby, looseness can be prevented over a long period of time.

In addition, it becomes possible to optimize the above-described effect, by forming screw threads on outer periphery of the large-diameter part of the fore end part, so as to be continuous to screw threads of the screw thread member while causing these threads to function as one thread.

Further, it may be a requirement that the screw thread member is formed in tapered thread shape.

In particular, the thread, when the screw thread member is formed in a tapered thread shape, that is, a compressive force is acting in a radial direction, the screw thread member made up of a soft material deforms in close contact so as to bridge a gap in conformance with thread shape of a counterpart to be screwed fit together, with the result that sealing capability can be enhanced markedly.

Further, it may be a requirement that a fluid piping that penetrates in an axis line direction is provided inside the insert core.

The thread can be configured as a thread for pipe applications, and it becomes possible to keep a high sealing capability for a fluid passing therethrough.

Further, it may be a requirement that a cross-sectional shape of at least a part of the fluid piping is of polygonal or ellipse shape for a rotation tool being fitly inserted.

A tool connecting part can be formed in the insert core that uses a hard material while achieving the above-described effect by using a soft material for the screw thread member of an outer periphery. Further, it becomes possible to attain reduction in size, reduction in cost of the insert core.

Further, it may be a requirement that an outer periphery shape of the insert core has a thread shape in which positions of crests and roots thereof agree with those of crests and roots of screw threads of the screw thread member in an axis line direction.

It becomes possible to make a thickness of the screw thread member uniform, in the outer periphery the insert core, and to cause a force generated during fastening operation to act on equally, which is effective for prevention of deformation.

Further, it may be a requirement that a plurality of ribs for circumferentially partitioning thread grooves that constitute the thread shape are formed on an outer periphery of the insert core.

Even if a high load is applied between the insert core and the screw thread member during fastening operation, particularly, mutual positional displacement/deformation relative to each other in the circumferential direction can be prevented.

Further, it may be a requirement that, a plurality of protrusion parts or a plurality of groove parts extending in an axis line direction are formed on an outer periphery of the insert core.

Similar to the above, even if a high load is applied between the insert core and the screw thread member during fastening operation, particularly, mutual positional displacement/deformation relative to each other in the circumferential direction can be prevented.

Further, it may be a requirement that the insert core is configured using a polyamide MXD6 resin or a polyphenylene sulfide resin.

The insert core is excellent in strength, heat resistance, elastic strength, chemical resistance, dimensional stability, it is possible to insert/use a tool, and it can withstand a high load when used as a thread member.

Further, it may be a requirement that a screw thread member formed in close contact with the insert core is configured using a polybutylene terephthalate resin.

A polybutylene-terephthalate resin is suitable for a material of screw threads of an outer periphery because it is excellent in heat stability and dimensional accuracy, and electrical properties.

It may be requirement that the fastening system performs a fastening operation by using the thread for a taper pipe male-thread, and combining the taper pipe male-thread with a taper pipe female-thread or a parallel pipe female-thread.

A fastening system of threads for pipe applications with general-purpose capabilities imparted becomes feasible.

It may be a requirement that the pipe fitting includes a thread part having the above-described threads at one end side thereof, and a fitting part for connecting an external pipe is provided at the other end side.

A pipe fitting with a high sealing capability over a long period of time becomes feasible.

It may be a requirement that a manufacturing method of a thread (i.e. thread system) includes the steps of: locking the insert core inside a metal mold by a locking mechanism, so that a position register mark provided during forming process or after forming process of the insert core be located at a predetermined position; charging a material of screw thread member formed in close contact with an outer periphery of the insert core, into the metal mold; and forming a screw thread member in close contact with an outer periphery of the insert core, and at the same time forming screw threads of the screw thread member, so as to be continuous to screw threads formed on an outer periphery of a large-diameter part of a fore end of the insert core.

It becomes possible that, particularly, screw threads of a screw thread member formed in close contact with an outer periphery of an insert core, and screw threads integrally formed on outer periphery of a large-diameter part of the insert core, are formed so as to be continuous to each other.

### Effect of the invention

According to the present invention, a thread can be provided which is capable of increasing a close contact between threads to be screwed fit with each other to enhance a sealing capability of a fastened part, as well as inhibiting a deformation of screw threads over a long period of time, thus preventing looseness of fastened threads resulting from the deformation. A method for manufacturing the thread, a fastening system using the thread, a pipe fitting using the thread can also be accomplished.

### BRIEF DESCRIPTION OF THE DRAWINGS

Fig. 1A and Fig. 1B are a schematic view illustrating an example of a thread according to a first exemplary embodiment of the present invention.
Figs. 2A-2C are a schematic view illustrating a configuration of an insert core of a thread of Fig. 1A and Fig. 1B.
Fig. 3 is an enlarged view illustrating a configuration of a close contacting part between a screw thread member and an insert core of a thread of Fig. 1A and Fig. 1B.
Fig. 4 is an enlarged view illustrating a configuration of outer periphery part of an insert core of a thread of Fig. 1A and Fig. 1B.
Fig. 5 is a schematic view illustrating a configuration of a pipe fitting provided with a thread of Fig. 1A and Fig. 1B.
Fig. 6A and Fig. 6B are a schematic view illustrating an example of a thread according to a second exemplary embodiment of the present invention.
Fig. 7 is a schematic view illustrating a configuration of a pipe fitting provided with a thread of Fig. 6A and Fig. 6B.
Fig. 8 is a schematic view illustrating a configuration of a fastening system according to exemplary embodiments of the present invention.

### DESCRIPTION OF EMBODIMENTS

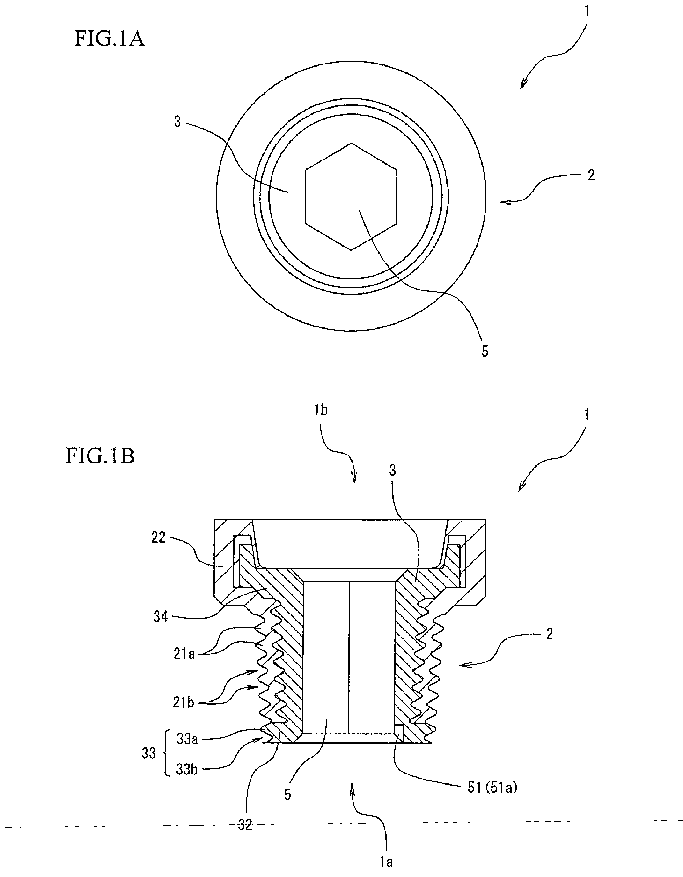

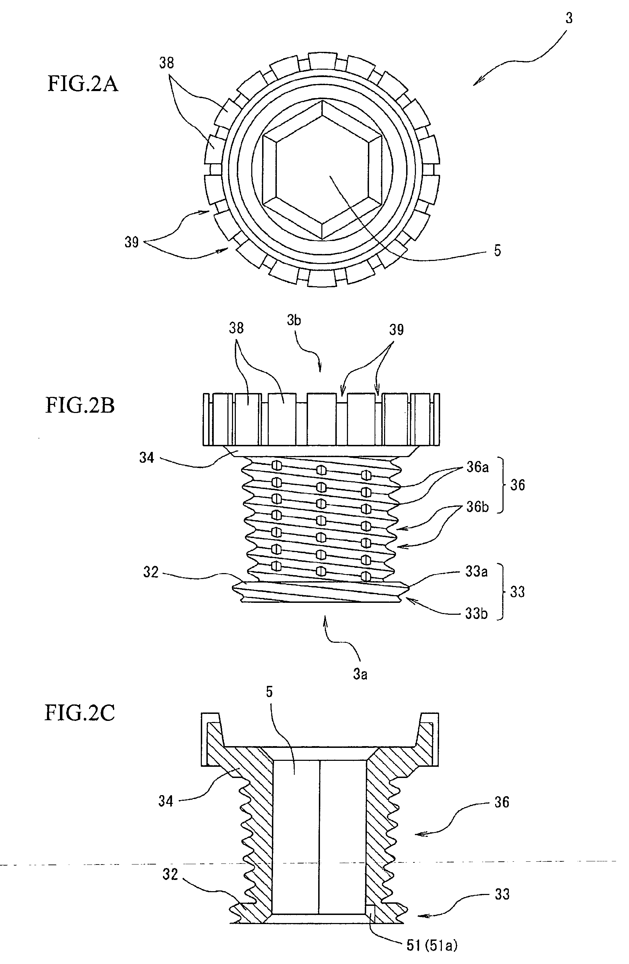

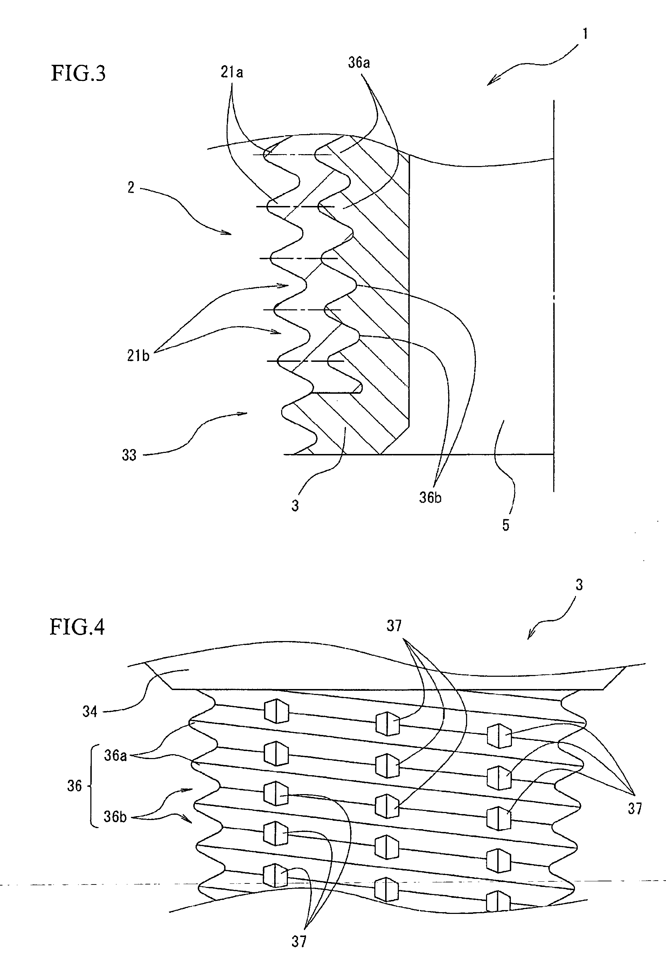

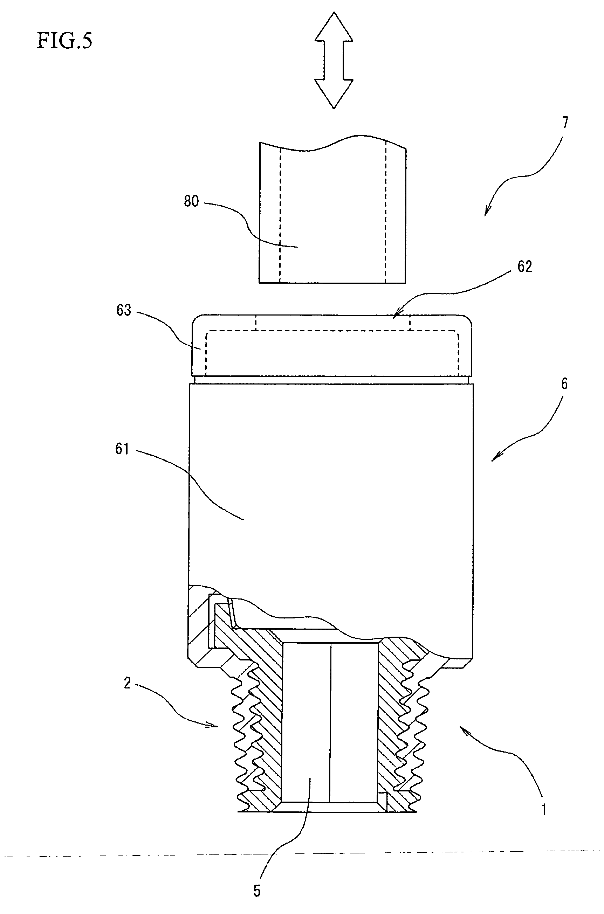

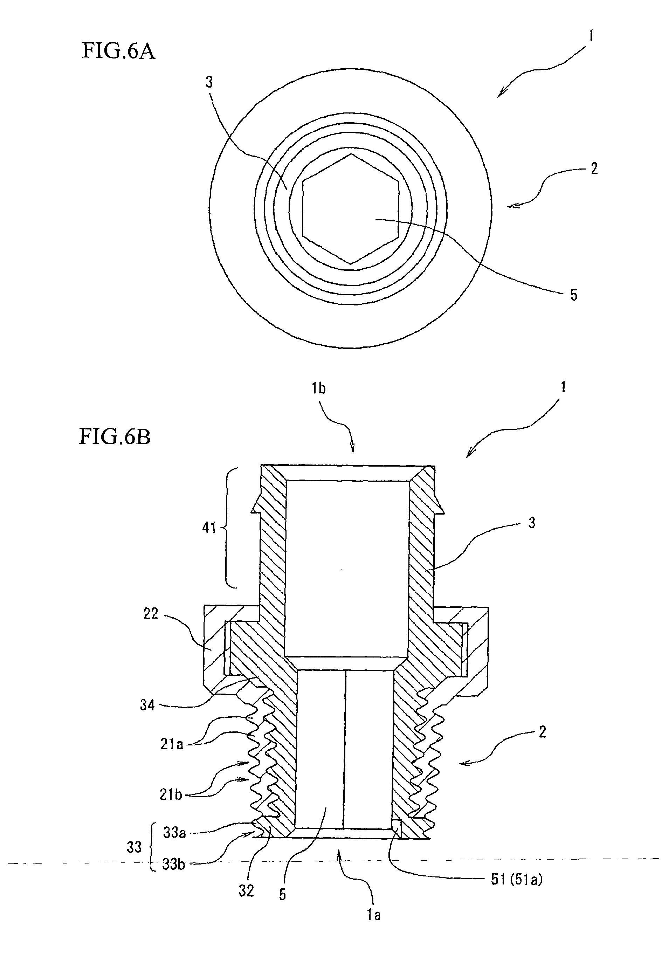

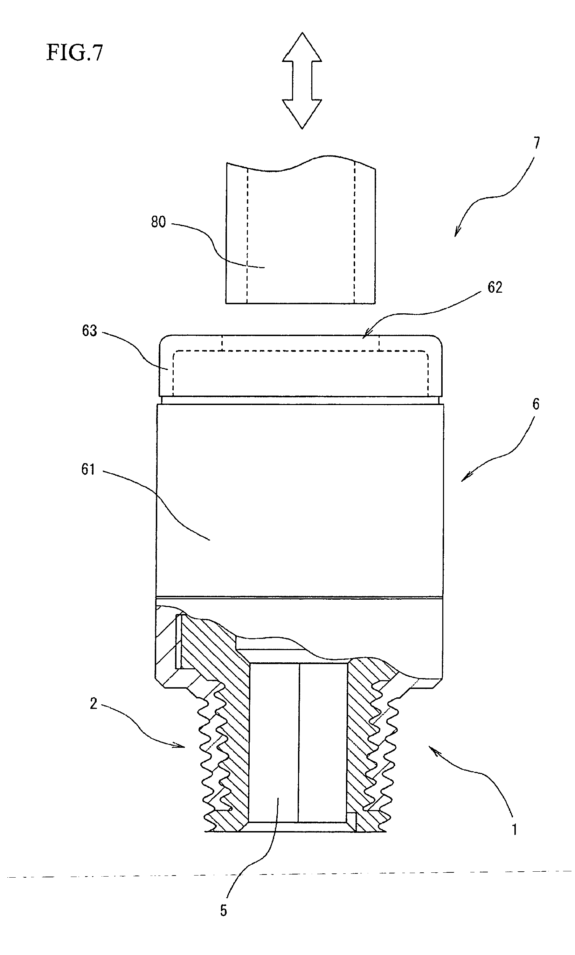

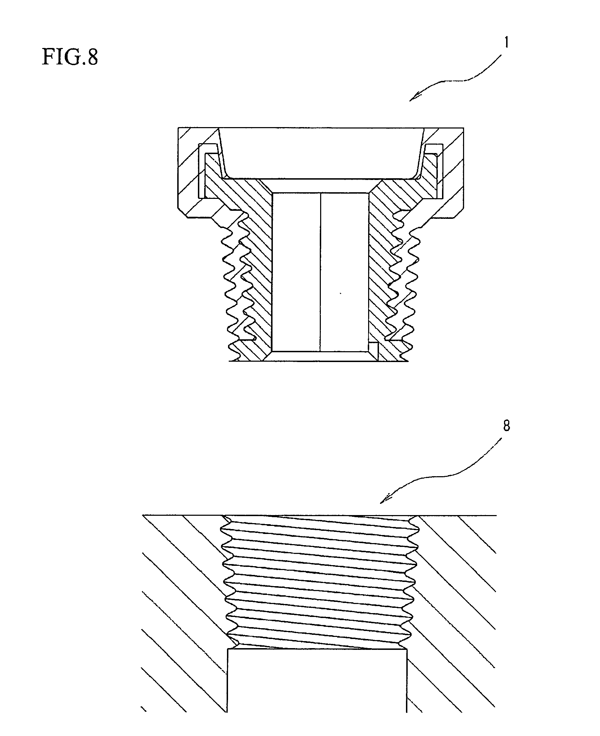

Hereinafter, exemplary embodiments of the present invention will be described in detail with reference to the drawings. Fig. 1A and Fig. 1B are a schematic view illustrating an example of a thread 1 according to a first exemplary embodiment of the present invention, Fig. 1A is a top plan view, and Fig. 1B is a front elevational sectional view. Figs. 2A-2C are a schematic view illustrating a configuration of an insert core 3 of the thread 1, Fig. 2A is a top plan view, Fig. 2B is a front view, and Fig. 2C is a front elevational sectional view. Fig. 3 is an enlarged view illustrating a configuration of a close contacting part between a screw thread member 2 of the thread 1 and an insert core 3. Fig. 4 is an enlarged view illustrating a configuration of an outer periphery part of an insert core 3 of the thread 1. Fig. 5 is a schematic view illustrating a configuration of a pipe fitting 7 having the thread 1. Fig. 6A and Fig. 6B are a schematic view illustrating an example of a thread 1 according to a second exemplary embodiment of the present invention, Fig. 6A is a top plan view, and Fig. 6B is a front elevational sectional view. Fig. 7 is a schematic view illustrating a configuration of a pipe fitting 7 having the thread 1. Fig. 8 is a schematic view illustrating a configuration of a fastening system according to exemplary embodiments of the present invention.

As illustrated in Fig. 1A and 1B, a thread 1 according to the present exemplary embodiment is configured in which a screw thread member 2 is formed in close contact with an outer periphery of an insert core 3, which is configured as a male-thread. Further, large-diameter parts 32 and 34 sandwiching a screw thread member 2 therebetween in the axis line direction are formed at a fore end part 3a and a rear end part 3b (alternatively an intermediate part, nearer to a fore end part 3a from a rear end part 3b) of the insert core 3, respectively.

In this regard, the screw thread member 2 is made of a softer material than that of the insert core 3. As a consequence, particularly, if screw threads of the screw thread member 2 are formed in tapered thread shape, remarkable effect will result. More specifically, during fastening process, a compressive force acts in radial direction, the screw thread member 2 made of a soft material deforms to come into a close contact so as to bridge a gap in conformance with a shape of a thread part (here, female-thread (Refer to reference numeral 8 of Fig. 8) of a counterpart thread to be screwed fit together, resulting in enhancing a sealing capabilities markedly. It is to be noted that, as previously described, a soft material is likely to be deformed by a radial compressive force in both directions, i.e., in a screwing-on direction of an axis line direction and in reverse direction thereto, in a flowing-out manner so to speak. In the present exemplary embodiment, however, both end parts of screw threads of the screw thread member 2 are formed in such a manner as to be sandwiched by large-diameter parts 32 and 34 provided at a fore end part 3a and a rear end part 3b of the insert core 3, with result that such a deformation is inhibited, and looseness of fastened thread resulting from the deformation is prevented over a long period of time.

To inhibit the above-described deformation, it is suitable to configure such that, at position where deformation develops, that is, at outside diameter position of crest parts 21a and root parts 21b of the screw thread member 2, crest parts 21a and root parts 21b are sandwiched by large-diameter parts 32 and 34. However, if outside diameters of the large-diameter parts 32 and 34 are formed larger than outside diameter of the crest part 21a of the screw thread member 2, sandwiching will be adequate, but if a large-diameter part 32 of the fore end part 3a becomes larger in diameter than that of the crest part 21a of the screw thread member 2, screwing fit together with female-threads becomes impossible. Therefore, a configuration in which the large-diameter part 34 has larger diameter than that of the crest part 21a of the screw thread member 2, and the large-diameter part 32 has the same diameter as that of the crest part 21a of the screw thread member 2, can be said to be best suited for inhibiting deformation by contacting the whole of both end parts of screw threads of screw thread member 2. To accomplish the configuration, in the present exemplary embodiment, particularly, a screw thread 33 that is continuous to screw threads of screw thread member 2 is formed on an outer periphery of a large-diameter part 32 of fore end part 3a of the insert core 3. That is, a crest part 21a and a root part 21b of the screw thread member 2 are formed so as to be continuous to a crest part 33a and a root part 33b of the screw thread 33, respectively, which are caused to function integrally as one thread, as well as an outside diameter of a large-diameter part 32 is optimized (maximized) within a permissible range.

In addition to this, in the present exemplary embodiment, as illustrated in Fig. 3, an outer periphery shape of the insert core 3 has a thread shape (crest parts 36a and root parts 36b) in which positions of crests and roots thereof agree with crests and roots (crest parts 21a and root parts 21b) of screw thread of screw thread member 2 in an axis line direction. As a consequence, relatively hard material (e.g., high strength resin) is used for the insert core 3, while relatively soft material (e.g., resin) is uniformly molded on the screw thread member 2 of the outer periphery. Thereby, a structure is made practicable, which is not broken even if the insert core 3 is rotated using a tool, and which is free of missing/deformation/aging and so forth of screw threads of the screw thread member 2 resulting from a high load associated with thread fastening.

Furthermore, as illustrated in Fig. 4, a plurality of convex-shaped ribs 37 for circumferentially partitioning thread grooves 36b that constitute thread shape are formed on an outer periphery of the insert core 3. Further, as illustrated in Fig. 2, a plurality of protrusion parts 38, and a plurality of groove parts 39 extending in the axis line direction are formed on the outer periphery of the insert core 3, which are covered by an extending part 22 of the screw thread member 2.

By virtue of these, even if a high load is applied between the insert core 3 and the screw thread member 2 during fastening operation, particularly, mutual positional displacement/deformation relative to each other in the circumferential direction can be prevented, and aging can be also prevented.

Now, as an example of materials to be used, the insert core 3, a polyamide MXD6 resin or a polyphenylene sulfide resin, and so forth are suitable. The polyamide MXD6 resin is a material that is excellent in strength, heat resistance, and elastic strength, chemical resistance, dimensional stability, and permits insertion/use of a tool, capable of resisting a high load when used for a thread member. The performance thereof can be further enhanced by causing it to contain glass fiber by 50%. The best suited material is Reny (registered trademark for Mitsubishi Gas Chemical Company, Inc.). Further, the polyphenylene sulfide resin has very high strength and rigidity, and it is also excellent in wear (abrasion) resistance. Although less rigid than a polyamide MXD6 resin, the polyphenylene sulfide resin becomes to be the best suited in some use applications of threads because it has a high food safety, and Food and Drug Administration (FDA) and National Science Foundation (NSF) approve its use in parts where it comes into contact with food equipment kitchen appliances and tap drinking water.

On the other hand, a polybutylene terephthalate resin or the like is suitable for the screw thread member 2. It is excellent in heat stability, dimensional accuracy, electrical characteristics, and it is suitable for material of a thread part on an outer periphery.

As described above, since a thread 1 according to the present exemplary embodiment is able to achieve a high sealing capability, it is suitable to implement it as a thread for pipe applications. As an Example, it can be configured as a thread for pipe applications by providing a fluid piping inside the insert core 3, which penetrates through the center of diameter of the insert core 3 in question in the axis line direction.

Generally, since a pipe thread is provided with a piping therein, it has no other choice but to provide a tool connecting part for inserting fitly a tool for rotation on an outer periphery part. However, in the present exemplary embodiment, since an outer periphery part, namely, a screw thread member 2 is made of soft material, it is unfit to form the tool connecting part thereon. On the other hand, to form the tool connecting part, if the insert core 3 has been once formed extending longer than an extending part 22 of the screw thread member 2 in a direction of a rear end part 1b, it results in lack of compactness.

Thus, in the present exemplary embodiment, a configuration in which a thread 1 can be suitably implemented as a thread for pipe applications has been accomplished by devising a structure that enables the use both as a fluid piping and a tool connecting part (Refer to Fig. 1).

To be more specific, a through-hole 5 having a polygonal cross-section that is used to share a fluid piping and a tool connecting part for fitly inserting a rotation tool for rotating a thread 1 is provided inside the insert core 3, so as to penetrate through the center of radius of the insert core 3 in question in the axis line direction.

As an example, the through-hole 5 is formed in hexagonal shape in a part or the whole in the axis line direction. As a consequence, it becomes possible to fasten using a general purpose hexagonal wrench, which improves a general-purpose capability thereof as thread parts.

However, a cross-sectional shape of the through-hole 5 is not limited to hexagon, but other polygon (e.g., including a shape such as star-like shape), alternatively a shape made up of curves other than perfect circle such as ellipse or the like would be acceptable.

Furthermore, as illustrated in Fig. 8, it is possible to configure a fastening system in such a manner that a thread 1 according to the present exemplary embodiment is formed as a taper pipe male-thread, and fastening process is performed by combining this with a taper pipe female-thread 8, or a parallel pipe female-thread (not shown). For example, it becomes possible to enhance a general-purpose capability thereof by applying the standard, JIS B 0203.

Alternatively, an aspect is conceivable, such as the one in which a taper pipe female-thread 8 in Fig. 8 is formed as a connecting part in, for example, fluid equipment (not shown) or the like.

Further, as a suitable Example, as illustrated in Fig. 5, a configuration is conceivable, which is implemented as a pipe fitting 7 in which a thread 1 according to the present exemplary embodiment is provided at one end side, and a fitting part 6 for connecting an external pipe 80 is provided at the other end side.

In more detail, the pipe fitting 7 is provided with a tubular main body 61, an opening part 62 is provided at one end thereof, into which a pipe 80 is inserted, and the other end is connected to the thread 1. A connecting mechanism (not shown) for connecting the pipe 80 is provided inside the main body 61, and a rubber packing (not shown) is provided in the opening part 62. By causing the packing to come into a close contact with the main body 61 and inserted pipe 80 without gaps, sealing is effected so that fluid to be passed therethrough may not leak, as well as, a ring-shaped gap part 63 for locking out the connecting mechanism and the packing is provided.

In the present exemplary embodiment, the tubular main body 61 of the fitting part 6 and the screw thread member 2 are integrally formed using the resins.

Then, a thread 1 according to a second exemplary embodiment will be described.

As illustrated in Fig. 6A and Fig. 6B, a connecting part 41 is provided at a rear end part 1b as a difference from a thread 1 according to the first exemplary embodiment. The connecting part 41 in question is integrally formed, as an example, to be continuous to the insert core 3.

As an Example when configuring a pipe fitting 7 using a thread 1 according to the present exemplary embodiment, a configuration is conceivable, in which a fitting part 6 is formed in advance as a separate element, and connected to a connection part 41 (Refer to Fig. 7).

According to the configuration, by struggling to commonality of the thread part (the thread 1) while responding to shifting to a wide variety products of the fitting part 6, saving of manufacturing costs, or shifting to mass-production becomes possible.

Then, a method of manufacturing a thread 1 according to the present exemplary embodiment will be described.

As previously described, the thread 1 has a configuration in which screw threads of a screw thread member 2 are sandwiched by large-diameter parts 32 and 34. In particular, the thread 1 has a configuration in which screw threads 33 that are continuous to screw threads of a screw thread member 2 are formed on an outer periphery of a large diameter part 32 of a fore end part 3a of an insert core 3.

Upon accepting this configuration, as a characteristic configuration in a manufacturing method of the thread 1, the method includes the steps of forming a position register mark 51 in advance, in the insert core 3, during manufacturing process or after manufacturing process, locking up the insert core 3 inside a metal mold (not shown) by a locking mechanism (not shown), so that the position register mark 51 in question to be located at a predetermined position in a circumferential direction, and subsequently, charging a material of the screw thread member 2 which is to be formed in close contact with an outer periphery of the insert core 3, into the metal mold, and then, forming a screw thread member 2 in close contact with the outer periphery of the insert core 3, and at the same time forming screw threads of the screw thread member 2 so as to be continuous to the screw thread 33 formed on an outer periphery of a large-diameter part 32 of a fore end part 3a of the insert core 3. As a consequence, it becomes possible to manufacture the thread 1 such that screw threads of the screw thread member 2, and the screw thread 33 function integrally as a continuous one thread.

In this regard, there is nothing wrong with whatever shape the position register mark 51 may take, but the present exemplary embodiment has a configuration in which a position register groove 51a is formed on one side of a fore end part of a through-hole 5 with hexagonal cross-section, as well as a position register protrusion (not shown) corresponding to this is provided in the locking mechanism.

As described up to this point, a thread according to the present invention can enhance a close contact with threads to be screwed fit together using a soft material for the screw thread member, improve sealing capabilities of fastened part, as well as prevent the screw thread member in question from resulting in deforming much more than necessary, and prevent looseness due to deformation of fastened thread. Further, it becomes possible to sustain these effects over a long period of time.

Further, it becomes possible to suitably implement a fastening system, or a pipe fitting by using this thread.

## Claims

1. A thread (1) wherein
a screw thread member (2) has screw threads formed on an periphery thereof, the screw thread member (2) made up of softer material than that of an insert core (3) is formed in a close contact with an outer periphery of an insert core (3),
large-diameter parts (32, 34) that sandwich the screw thread member (2) in an axis line direction are formed, in a fore end part (3a) and a rear end part (3b) of the insert core (3) or an intermediate part, namely, nearer to the fore end part (3a) from the rear end part (3b),
screw threads (33) that are continuous to screw threads of the screw thread member (2) are formed on an outer periphery of a large-diameter part (32) of the fore end part (3a).

2. The thread (1) according to claim 1, wherein the screw thread member (2) is formed in tapered thread shape.

3. The thread (1) according to any one of claims 1 or 2, wherein a fluid piping that penetrates in an axis line direction is provided inside the insert core (3).

4. The thread (1) according to any one of claims 1-3, wherein a cross-sectional shape of at least a part of the fluid piping is of polygonal or ellipse shape for a rotation tool being fitly inserted.

5. The thread (1) according to any one of claims 1-4, wherein an outer periphery shape of the insert core (3) has a thread shape in which positions of crests and roots (36a, 36b) thereof agree with those of crests and roots (21a, 21b) of screw threads of the screw thread member (2) in an axis line direction.

6. The thread (1) according to claim 5, wherein a plurality of ribs (37) for circumferentially partitioning thread grooves (36b) that constitute the thread shape are formed on an outer periphery of the insert core (3).

7. The thread (1) according to any one of claims 1-6, wherein a plurality of protrusion parts (38) or a plurality of groove parts (39) extending in an axis line direction are formed on an outer periphery of the insert core (3).

8. The thread (1) according to any one of claims 1-7, wherein the insert core (3) is configured using a polyamide MXD6 resin or a polyphenylene sulfide resin.

9. The thread (1) according to any one of claims 1-8, wherein a screw thread member (2) formed in close contact with the insert core (3) is configured using a polybutylene terephthalate resin.

10. A fastening system for performing a fastening operation by using a thread (1) according to any one of claims 3-9 for a taper pipe male-thread, and combining the taper pipe male-thread with a taper pipe female-thread (8) or a parallel pipe female-thread.

11. A pipe fitting (7) wherein a thread part having threads (1) according to any one of claims 3-9 is provided at one end side thereof, and a fitting part (6) for connecting an external pipe (80) is provided at the other end side.

12. A manufacturing method of a thread (1) according to any one of claims 1-9, the method comprising the steps of:
locking the insert core (3) inside a metal mold by a locking mechanism, so that a position register mark (51) provided during forming process or after forming process of the insert core (3) be located at a predetermined position;
charging a material of screw thread member (2) formed in close contact with an outer periphery of the insert core (3), into the metal mold; and
forming a screw thread member (2) in close contact with an outer periphery of the insert core (3), and at the same time forming screw threads of the screw thread member (2), so as to be continuous to screw threads (33) formed on an outer periphery of a large-diameter part (32) of a fore end part (3a) of the insert core (3).
